# EUROPEAN PATENT APPLICATION

(11) **EP 1 052 641 A1**
(43) Date of publication of application: **15.11.2000**
(21) Application number: 00108960.6
(22) Date of filing: 27.04.2000
(51) Int. Cl.: G11B 23/107, G11B 23/26

(54) **Tape cartridge**

(30) Priority: 11.05.1999 JP 12977099; 12.05.1999 JP 13144599; 09.07.1999 JP 19578499
(71) Applicant: TDK Corporation, Chuo-ku, Tokyo 103-8272 (JP)
(72) Inventor: Kaneda, Hiroshi, c/o TDK Corportion, Tokyo 103-8272 (JP); Shima, Motohiko, c/o TDK Corportion, Tokyo 103-8272 (JP); Okamura, Masatoshi , c/o TDK Corportion, Tokyo 103-8272 (JP)
(74) Representative: Schwan, Gerhard, Dipl.-Ing.

(57) **Abstract**

A tape cartridge wherein a single tape reel on which tape is wound is turnably held within a housing. The beginning of tape is fixed to a leader. The tape is drawn out through an opening of the housing by a tape draw-out member into a recorder. The leader comprises a pin member and a C-shaped clamp member adapted to fit over the pin member. The outer surface portion of the pin member and/or the inner surface of the clamp member is formed with at least one surface irregularity. In another aspect, the pin member has a center tape-holding part and, from the center toward both ends, first flanges, necks, and second flanges, one each, and the pin member consists of a combination of a plurality of components. In another aspect, either the pin member or clamp member is formed with detaching portions by which the members can be separated.

## Description

### BACKGROUND OF THE INVENTION

### [Field of the invention]

This invention relates to a single-reel type tape cartridge for magnetic recording-reproducing apparatus.

### [Prior art]

Tape cartridges of the type using a single reel have already been proposed, e.g., in Japanese Patent Application *Kokai* No. 58-171773. FIG. 9 is a plan view of a single-reel type cartridge 100 disclosed in the specification of the above-mentioned application. A housing 102 is shown containing a length of magnetic tape 106 wound round a single reel consisting of a turnable hub 104 and a flange 108. Housing 102 has an opening 160 formed at one corner, where a block-receiving recess 118 is provided and a leader block 116 for tape insertion is removably fitted in the recess. Leader block 116 has a groove 150 in which the beginning of magnetic tape 106 is secured in position with an engaging pin 152. On the outer side of leader block 116 is formed another groove 154 to receive securely a draw-out pin which comes out of a recording-reproducing apparatus (hereinafter referred to as a "recorder") and draws out leader block 116 from the housing.

When cartridge 100 is used, an automatic loader of the recorder operates to drive the draw-out pin (not shown) first into groove 154 and into engagement with leader block 116. The pin then draws leader block 116 out, puts it in a position along a given tape path of the recorder, and eventually accommodates leader block 116 fixedly in a recess provided along the periphery of the hub of a take-up reel of the recorder. When the tape is to be rewound, leader block 116 is brought back to the position (shown) in the opening of cartridge 100 by way of a route reverse to that described above.

In the tape cartridge of the type disclosed in Patent Application *Kokai* No. 58-169380, the beginning of tape is fastened to leader block 116 with pin 152 of synthetic resin.

In the tape cartridge of the prior art as described above, the leader end of the tape is fixed to leader block 116. The leader block is designed to enter a recorder to constitute a part of the periphery of a reel onto which the tape is to be taken up. For that reason the block has to be machined with such high precision that providing every cartridge with the block costs dearly. It might then be considered possible as an alternative to affix the beginning of the tape to a pin-like leader, while the function of a leader block is transferred to the recorder, so that the cartridge can utilize only the leader for the purpose of drawing the tape out.

Actually, when the tape end is fixed to a pin-like leader, there is a possibility of the tape coming off from the leader upon subjection to strong tension or with accidental fall of the cartridge or external impact during transportation.

It is therefore an object of the present invention to solve this problem.

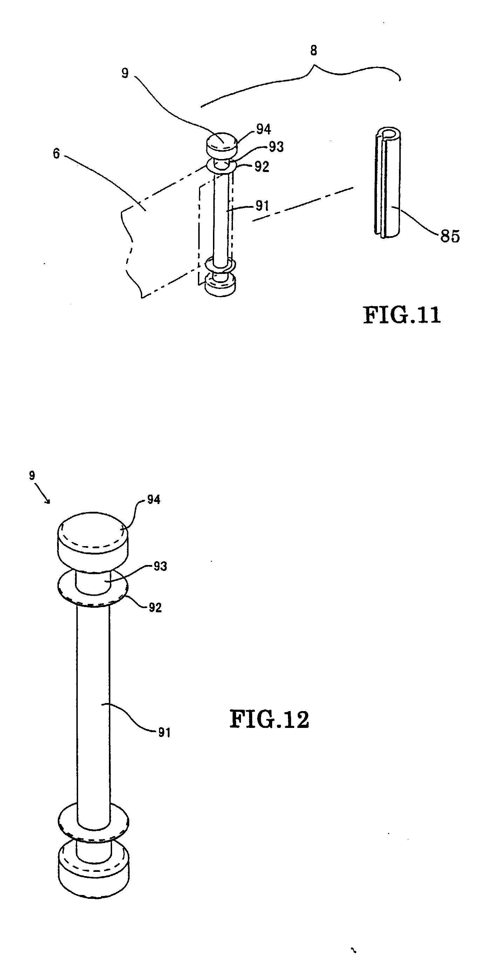

The pin-like leader has a complex construction in that its tape-carrying shank must have portions (necks) with which a draw-out mechanism of a recorder can grip the leader. It therefore requires such high precision and strength that machining metallic material into one-piece pin members is too expensive. This will be explained in more detail below. FIG. 11 illustrates a leader 8 that replaces the conventional one described above. Leader 8 is made up of a pin member 9 and a C-shaped clip member 85 which fits over pin member 9 with the end of tape 6 pressed in between. Pin member 9 has a tape-holding shank or part 91 in the middle and, from the middle to the both ends, first flanges 92, necks 93, and second flanges 94, one for each end portion of the part. It takes time (and cost) to manufacture such a pin member having a plurality of flanges with good precision in one piece of, e.g., metal. Especially because the first flanges 92 are only about 0.1 to 0.3 mm thick, technical difficulty is involved in machining for metal removal from a workpiece leaving the thin flanges behind.

Therefore, another object of the invention is to solve the above problem.

In the tape cartridge of the prior art as described above, the leader end of the tape is fixed to leader block 116. The leader block is designed to enter a recorder to constitute a part of the periphery of a reel onto which the tape is to be taken up. For that reason the block has to be machined with such high precision that providing every cartridge with the block costs dearly. It might then be considered possible as an alternative to affix the beginning of the tape to a pin-like leader and utilize the leader only for the purpose of drawing the tape out.

Actually, when the tape end is to be fastened to a pin-like leader, it is essential that the tape be securely held lest it come off. Nevertheless, erroneous assembling or defective tape quality sometimes present problems, necessitating abandonment of inferior products, and yet sound components cannot be reused.

Thus it is a further object of the invention to solve the above problem.

### SUMMARY OF THE INVENTION

The present invention solves the problems of the prior art by providing a tape cartridge wherein a single tape reel on which a length of tape is wound is turnably held within a housing, the beginning of tape is fixed to a leader, and the tape is drawn out through an opening formed in the housing by a tape draw-out member into a recorder, the leader comprising a pin member and a generally C-shaped clamp member, and at least either the outer surface portion of the pin member or the inner surface of the clamp member that comes in contact with tape being formed with at least one surface irregularity.

Under the invention, either the outer surface of the pin member or the inner surface of the C-shaped clamp member is formed with at least one groove and the opposing surface is formed with at least one rib to fit in the groove.

Preferably, the clamp member is made of plastic, and a second clamp member of metal is provided on the outer surface of the clamp member.

Under the invention, the beginning of tape is wound up in conformity with at least one rib or groove formed on the outer surface of the pin member and/or on the inner surface of the clamp member, and therefore the clamping force is increased and there is no possibility of tape coming off from the leader, even when tape is suddenly subjected to tension.

The clamping force against the tape end is more enhanced by engagement of at least one rib or groove formed each on the outer surface of the pin member and on the inner surface of the clamp member with at least one corresponding groove or rib on the mating member.

Further, double clamping reinforces the C-shaped plastic clamp member and ensures stable clamp force for long.

In another aspect the invention provides a tape cartridge wherein a single tape reel on which a length of tape is wound is turnably held within a housing, the beginning of tape is fixed to a leader, and the tape is drawn out through an opening formed in the housing by a tape draw-out member into a recorder. The leader is composed of a pin member and a generally C-shaped clamp member, the pin member consists of a tape-holding part in the center and, from the center toward the both ends, first flanges, necks, and second flanges in the order of mention, one each, and the pin member consists of a combination of a plurality of components.

Preferably, the first flanges are made separate from the rest of pin member.

Also, preferably, the tape-holding part is made of plastic and the necks are made of metal.

As stated above, the pin member according to the invention can be manufactured with ease because either the first flanges and the remainder or the three component parts, i.e., tape-holding part, first flanges, and necks and second flanges, are made separate. Moreover, the tape-holding part and the necks to be gripped by a recorder may be made of different materials most suited for their intended functions.

In a further aspect the invention provides a tape cartridge wherein a single tape reel on which a length of tape is wound is turnably held within a housing, the beginning of tape is fixed to a leader, and the tape is drawn out through an opening formed in the housing by a tape draw-out member into a recorder, characterized in that the leader is composed of a pin member and a C-shaped clamp member so that tape wound on the pin member is fixedly held by the C-shaped clamp member thereon, and either the pin member or the clamp member is formed with detaching portions by which the two members can be separated.

### BRIEF DESCRIPTION OF THE DRAWINGS

FIG. 1 is an exploded view of a tape cartridge embodying the present invention;
FIG. 2 gives a perspective view of a pin member in a leader in one embodiment of the invention and a fragmentary enlarged view of a part of the pin member;
FIG. 3 is an exploded view of a leader and a leader end of tape in the above embodiment;
FIG. 4 is a perspective view of a C-shaped clamp member for a leader in another embodiment;
FIG. 5 is an exploded view of a leader and a leader end of tape in still another embodiment;
FIG. 6 is a perspective view of a pin member in a leader in yet another embodiment;
FIG. 7 is a perspective view of a clamp member of the leader shown in FIG. 6;
FIG. 8 is a perspective view, partly cut away, of a combination of the two leader components in FIGS. 6 and 7;
FIG. 9 is a plan view of a conventional single-reel type tape cartridge;
FIG. 10 is an exploded view of a tape cartridge embodying the present invention;
FIG. 11 is an exploded view of a leader;
FIG. 12 is a perspective view of a pin member;
FIG. 13 is an exploded view of a pin member;
FIG. 14 is a perspective view of another embodiment;
FIG. 15 is an exploded view of a tape cartridge embodying the present invention;
FIG. 16 shows, in perspective, a leader of an embodiment of the invention, (a) as exploded and (b) as assembled;
FIG. 17 shows, in perspective, a leader of another embodiment of the invention, (a) as exploded and (b) as assembled;
FIG. 18 shows, in perspective, a leader of still another embodiment of the invention, (a) as exploded and (b) as assembled;
FIG. 19 gives (a) a sectional view of FIG. 18 and (b) a front view;
FIG. 20 shows, in perspective, a leader of still another embodiment of the invention, (a) as exploded and (b) as assembled; and
FIG. 21 is a sectional view of FIG. 20.

### DESCRIPTION OF THE PREFERRED EMBODIMENTS

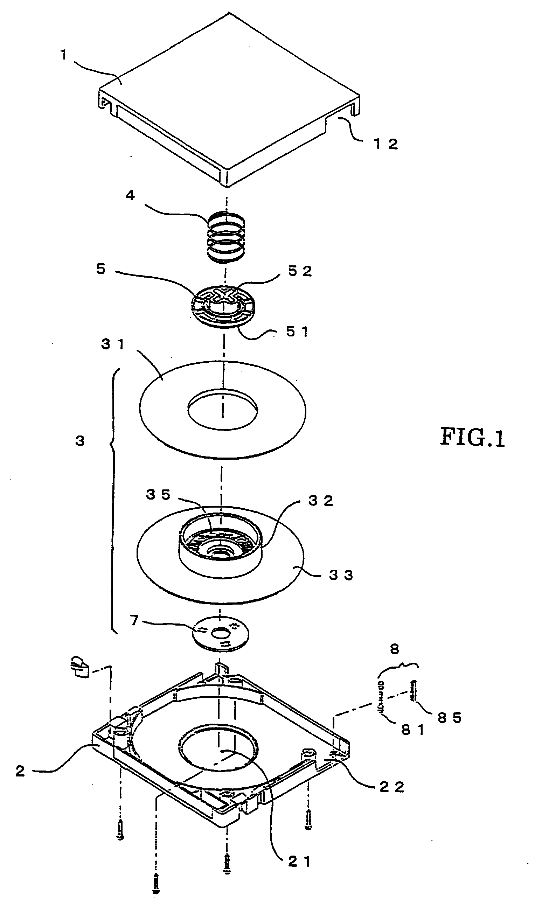

FIG. 1 is an exploded view of a tape cartridge as an embodiment of the invention.

The cartridge turnably contains a single tape reel 3 on which a length of tape is wound in a housing consisting of an upper casing 1 and a lower casing 2.

Lower casing 2 has an opening 21 into which a drive shaft of a recorder is to be inserted. In addition, upper and lower casings 1, 2 are formed, respectively, with openings 12, 22 through which the tape is to be pulled out.

Tape reel 3 consists integrally of an upper flange 31, a hub 32 formed in one piece with a lower flange 33, and a metal disk 7 of a soft magnetic material that fits to the underside of hub 32. Metal disk 7 has a serration (not shown) formed along its periphery and adapted to engage with a drive shaft of a recorder, whereby it is magnetically attracted to turn tape reel 3. There is no member to fix the tape in place, because the tape is directly affixed to the outer periphery of the hub with water or the like.

Hub 32 has a tooth-like part 35 formed on its inner surface to be in mesh with a reel brake 5, which is axially urged by a spring 4 into the meshed position but does not turn itself, so as to prevent unwanted turning of tape reel 3 when the latter is not in use.

Reel brake 5 has a tooth-like part 51 formed on its underside in mesh with the corresponding part 35 of hub 32. Reel brake 5 is normally urged in the braking position by brake spring 4. An upward projection 52 of reel brake 5 can be positively moved up and down between the braking position and a brake release position by means of a positioning part (not shown) formed on the inner surface of upper casing 1. Once the cartridge is loaded in a recorder, a magnetized sucking plate that constitutes a part of the drive shaft of the recorder ascends to attract metal disk 7 while, at the same time, a brake release member of the recorder lifts the reel brake 5, against the urging of spring 4, out of engagement with tape reel 3, setting the reel free to turn.

The leader end of tape 6 is fixed to a leader 8. Leader 8 is made up of a pin member 81 and a C-shaped clamp member 85 as will be described in detail below.

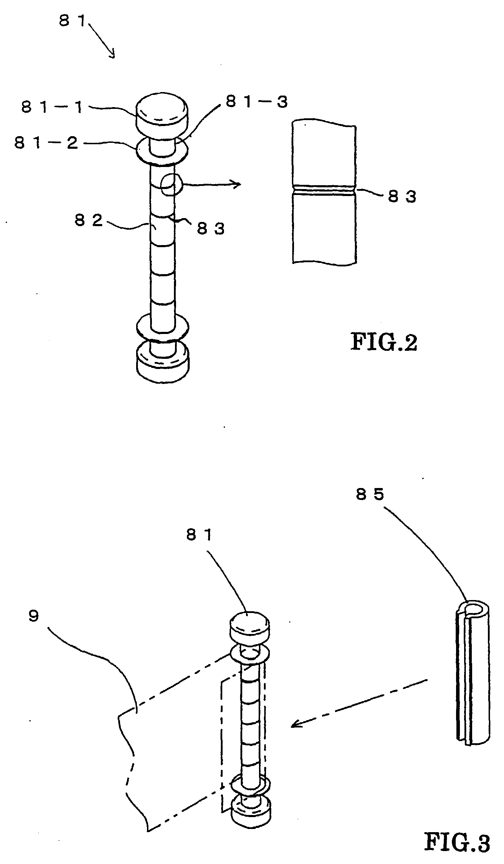

FIGS. 2 and 3 show an embodiment of the invention. FIG. 2 is a perspective view of a pin member 81. Pin member 81 is made of a metal and has, at its upper and lower portions, heads 81-1, collars 81-2, and necks 81-3 for receiving draw-out means of a recorder, one for each. Between collars 81-2 is defined a tape-holding part 82 on which the end of tape is fixed. A plurality of grooves 83 are formed in tape-holding part 82. Grooves 83 are formed with sufficient depth and width to receive tape.

As shown in FIG. 3, C-shaped clamp member 85 takes the form of a letter C in cross section, and with a slit it can be fitted onto tape-holding part 82 of pin member 81.

As FIG. 3 indicates, the beginning of tape 9 is wound on tape-holding part 82 of pin member 81, and C-shaped clamp member 85 is fitted over it. This forces tape 9 to bite into grooves 83 and enables the tape to be clamped securely.

C-shaped clamp member is made of a plastic or rubber. The use of metal is avoided because it can tear the tape. Plastic to be used may be selected from among suitable materials including acetal resins, nylons, polycarbonates, and synthetic rubbers. Rubber imparts increased frictional force to enhance clamping force, but its friction can cause difficulties in fitting the C-shaped clamp member to fit on a pin member. On the other hand, plastic material is easy to mount thanks to low friction but it sometimes fails to produce necessary clamping force. For these reasons it is important to choose a suitable material and select optimum groove dimensions.

Grooves 83 used in the illustrated embodiment may be replaced by projections or a roughened surface. The direction of grooves is not limited to circumferential; it may be vertical instead. By the roughened surface is meant any of sufficiently rough, macroscopically irregular surfaces, excluding matted ones. A matted surface is undesirable because it lessens frictional resistance.

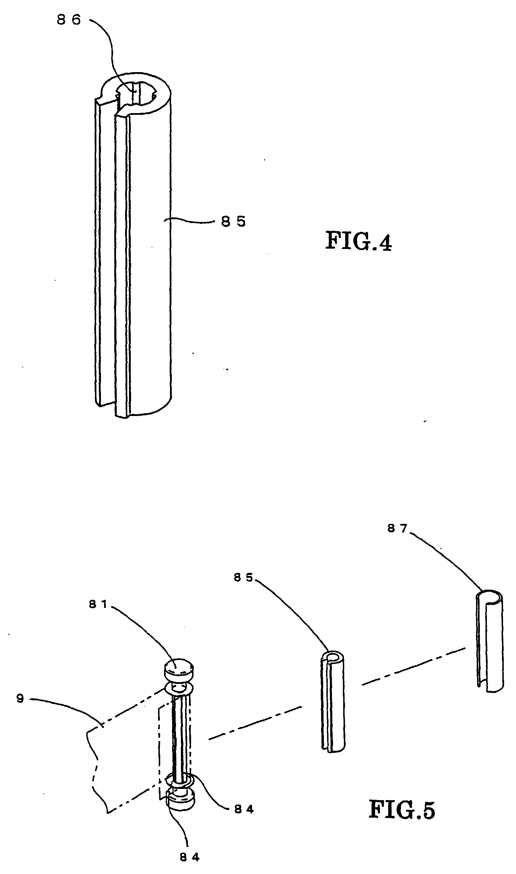

FIG. 4 shows a C-shaped clamp member 85 according to the invention which has a plurality of vertically extending ribs 86 formed on its inner wall. Ribs 86 may take a variety of shapes.

It is further possible to provide surface irregularities on both pin member 81 and C-shaped clamp member 85.

In this embodiment too, plastic or rubber may be used for C-shaped clamp member 85.

For added reliability, as FIG. 5 shows, a second clamp member 87 of metal may be fitted around C-shaped clamp member 85 that fits on pin member 81 in the manner described in connection with the first and second embodiments. The additional clamp increases the clamping force of C-shaped clamp member of plastic or rubber, adding to the grip on the tape end. In this embodiment tape-holding part 82 of pin member 81 is formed with a plurality of vertically extending ribs 84.

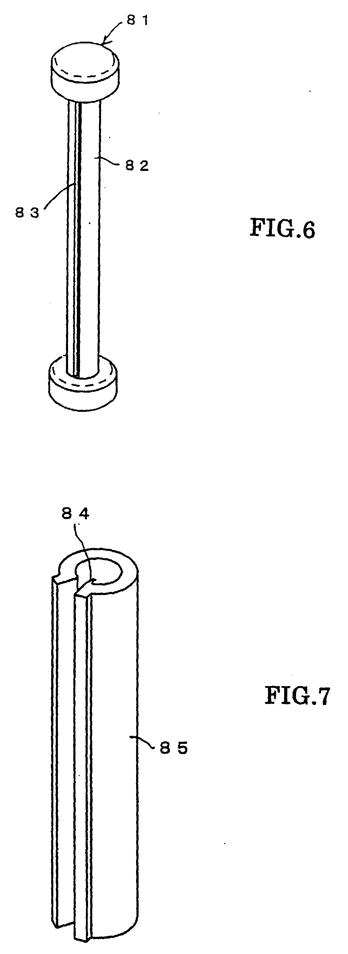

FIGS. 6 to 8 show still another embodiment of the invention. As FIG. 6 indicates, an axially extending groove 83 is formed in the tape-holding part 82 of pin member 81, and as FIG. 7 shows a rib 84 is axially formed in the portion facing groove 83 on the inner surface of C-shaped clamp member 85.

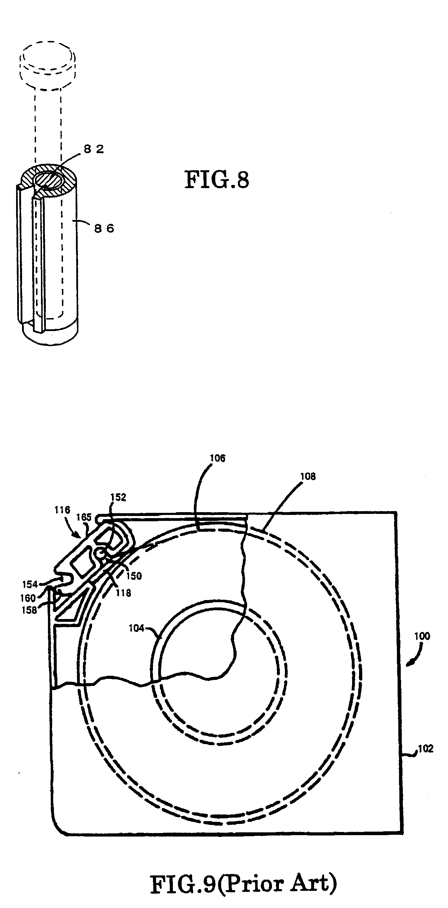

As shown in FIG. 8, the beginning of tape is wound round the tape-holding part 82 of pin member 81, and C-shaped clamp member 85 is fitted on it. At this time rib 84 of the C-shaped clamp member is engaged with groove 83 of the pin member, with tape in between.

In this manner the tape end is securely clamped in place.

Under the invention, the beginning (leader end) of tape is wound up in conformity with the surface irregularities of a leader, and therefore the clamping force is increased and there is no possibility of tape coming off from the leader, even when tape is suddenly subjected to tension.

The clamping force against tape is more enhanced by engagement of ribs or grooves formed on the outer surface of the pin member or on the inner surface of the clamp member with grooves or ribs on the mating member.

Further, double clamping reinforces the C-shaped plastic clamp member and ensures stable clamp force for long.

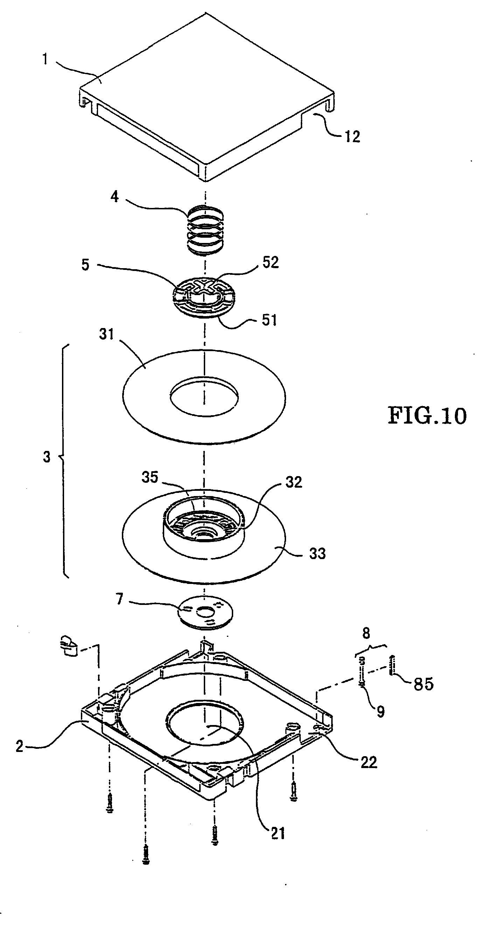

FIG. 10 is an exploded view of a tape cartridge as an embodiment of the invention.

The cartridge turnably contains a single tape reel 3 on which a length of tape is wound in a housing consisting of an upper casing 1 and a lower casing 2.

Lower casing 2 has an opening 21 into which a drive shaft of a recorder is to be inserted. In addition, upper and lower casings 1, 2 are formed, respectively, with cutouts 12, 22 through which the tape is to be pulled out. When the two casings are joined the cutouts form a single larger opening.

Tape reel 3 consists integrally of an upper flange 31, a hub 32 formed in one piece with a lower flange 33, and a metal disk 7 of a soft magnetic material that fits to the underside of hub 32. Metal disk 7 has a serration (not shown) formed along its periphery and adapted to engage with a drive shaft of a recorder, whereby it is magnetically attracted to turn tape reel 3. There is no member to fix the tape in place, because the tape is directly affixed to the outer periphery of the hub with water or the like.

Hub 32 has a tooth-like part 35 formed on its inner surface to be in mesh with a reel brake 5, which is axially urged by a brake spring 4 into the meshed position but does not turn itself, so as to prevent unwanted turning of tape reel 3 when the latter is not in use.

Reel brake 5 has a tooth-like part 51 formed on its underside in mesh with the corresponding part 35 of hub 32. Reel brake 5 is normally urged in the braking position by brake spring 4. An upward projection 52 of reel brake 5 can be positively moved up and down between the braking position and a brake release position by means of a positioning part (not shown) formed on the inner surface of upper casing 1. Once the cartridge is loaded in a recorder, a magnetized sucking plate that constitutes a part of the drive shaft of the recorder ascends to attract metal disk 7 while, at the same time, a brake release member of the recorder lifts the reel brake 5, against the urging of brake spring 4, out of engagement with tape reel 3, setting the reel free to turn.

The beginning of magnetic tape 6 is fixed to a leader 8. Leader 8, as illustrated in FIG. 11, consists of a pin member 9 and a C-shaped clamp member 85 of plastic. When the cartridge is loaded in a recorder, leader 8 is held by a holder in the recorder so that tape can be drawn out.

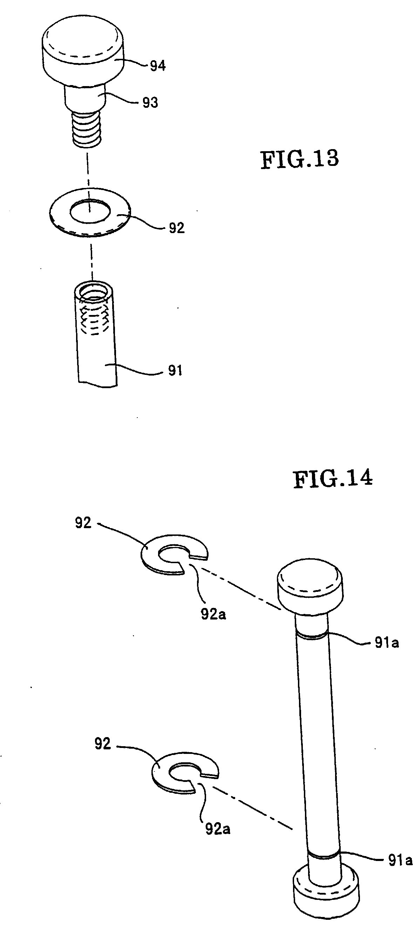

FIGS. 12 and 13 show a first embodiment of the pin member 9 of the invention. Pin member 9 has a shank or tape-holding part 91 in the center and, from the center toward the both ends, a pair of first flanges 92, necks 93 to be gripped by a recorder, and second flanges 94, one for each. As indicated in FIG. 13, each tape-holding part 91, each first flange 92, and each neck 93 formed in one piece with second flange 94 are made as separate components.

First flanges 92 can be simply made by punching sheet metal by a press or the like or by molding a plastic.

The both end portions of the tape-holding part 91 have axial hollows which are internally threaded and the inner end portions of the combinations of neck 93 and second flanges 94 are externally threaded for thread engagement to support first flanges 92 in between.

Pin member 9 is assembled by combining these three different parts (five pieces in all). First flanges 92 are held between tape-holding part 91 and two unitary pieces of neck 93 and second flange 94, and the three are securely joined by thread engagement into one piece as shown in FIG. 12.

While an embodiment has been described in which the tape-holding part 91 has internally threaded hollows at both ends and the necks 93 externally threaded, the relation may be reversed. It is further possible to join the components by press fitting rather than by thread engagement.

As for the material of components, necks 93 are preferably made of metal because of their engagement with and disengagement from a recorder. Tape-holding part 91 has no chance of engagement or disengagement with a recorder and its portion where tape is to be attached is not subject to strong external force. It may therefore be formed of a plastic material such as polyacetal, polycarbonate, or nylon.

FIG. 14 illustrates another embodiment. Here only the first flanges 92 are separate from the remainder. Tape-holding part 91, necks 93, and second flanges 94 are formed in one piece of metal. There is a groove 91a formed in each portion where a first flange 92 is to be fitted, and each flange 92 has a cutout 92a like a horseshoe for the purpose of assembling.

With the construction described, the pin member according to the invention has separate first flanges for the ease of fabrication.

The tape-holding part and the necks to be gripped by a recorder may be made of different materials. Thus a pin member with components optimum for their functions can be manufactured.

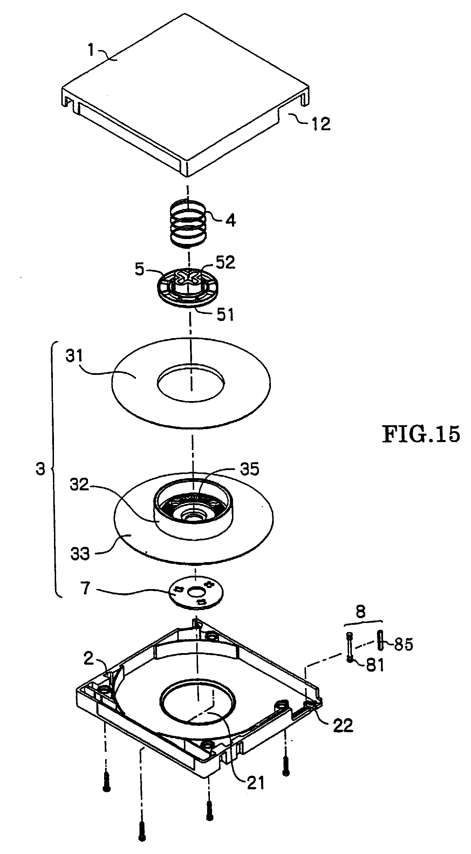

FIG. 15 is an exploded view of a tape cartridge as an embodiment of the invention.

The cartridge turnably contains a single tape reel 3 on which a length of tape is wound in a housing consisting of an upper casing 1 and a lower casing 2.

Lower casing 2 has an opening 21 into which a drive shaft of a recorder is to be inserted. In addition, upper and lower casings 1, 2 are formed, respectively, with cutouts 12, 22 through which the tape is to be pulled out.

Tape reel 3 consists integrally of an upper flange 31, a hub 32 formed in one piece with a lower flange 33, and a metal disk 7 that fits to the underside of hub 32. Along the periphery of the metal disk is formed a serration (not shown) for engagement with a drive shaft of a recorder. Metal disk 7 is made of a soft magnetic material and is magnetically attracted by a magnetic member of the recorder's drive shaft to turn tape reel 3. There is no member to fix the tape in place, because the tape is directly affixed to the outer periphery of the hub with water or the like.

Hub 32 has a tooth-like part 35 formed on its inner surface to be in mesh with a reel brake 5 so as to prevent unwanted turning of tape reel 3 when the latter is not in use. Reel brake 5 has a tooth-like part 51 formed on its underside in mesh with the corresponding part 35 of hub 32. Reel brake 5 is normally urged in the braking position by brake spring 4. An upward projection 52 of reel brake 5 has a cruciform guide groove, and the brake can be positively moved up and down between the braking position and a brake release position by means of a positioning part (not shown) formed on the inner surface of upper casing 1. Once the cartridge is loaded in a recorder, reel brake 5 is lifted by a pin that comes in from a recorder, out of engagement with tape reel 3, setting the reel free to turn.

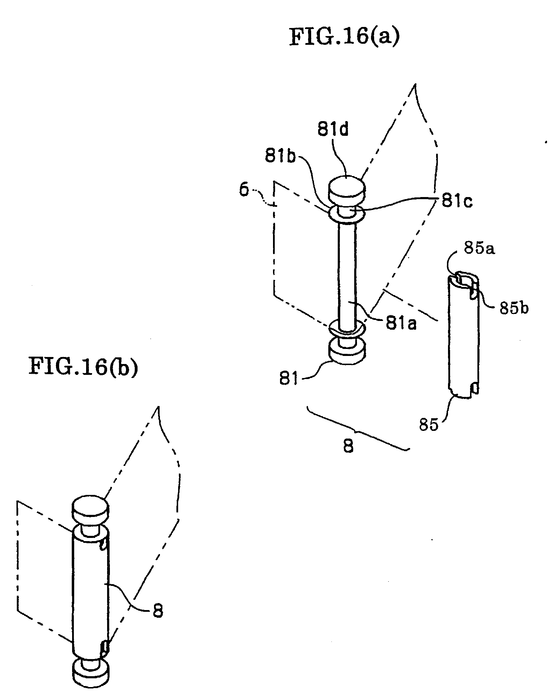

The beginning of tape 6 is fixed to a leader 8 as shown in FIG. 16. When the cartridge is loaded in a recorder, leader 8 is held by a holder (not shown) of the recorder so that tape can be drawn out. Leader 8 consists of a pin member 81 and a C-shaped clamp member 85. Tape 6 is wound at its end round pin member 81 and is secured in place by C-shaped clamp 85 fitted over the pin.

FIG. 16 gives perspective views showing leader 8 in detail. Pin member 81 comprises a shank or tape-holding part 81a in the center and, from the center toward the both ends, a pair of first flanges 81b, necks 81c to be gripped by a recorder, and second flanges 81d, one for each. Tape 6 is wound at its end round tape-holding part 81a, and C-shaped clamp 85 is fitted over it. C-shaped clamp 85 has an axial opening 85a of a suitable width and slits 85b formed at the upper and lower ends of the clamp body substantially opposite to the axial opening. C-shaped clamp 85 is made of a resin such as polycarbonate (PC), polyacetal (POM), or nylon (PA).

When C-shaped clamp 85 has been fitted in place and then wrong clamping (e.g., clamping film aslant) or a defect in the product is found, a suitable means such as a pointed tool is inserted into a slit 85b and C-shaped clamp 85 is forced away from pin member 81. The slits formed substantially opposite to the opening 85a help remove the C-shaped clamp because they enable external forces to be applied in good balance to both ends of the opening 85a. In this manner C-shaped clamp 85 can be detached without damaging tape 6. Although two slits 85b are shown formed, one for each, at top and bottom of the shank, only one slit may be formed on either end.

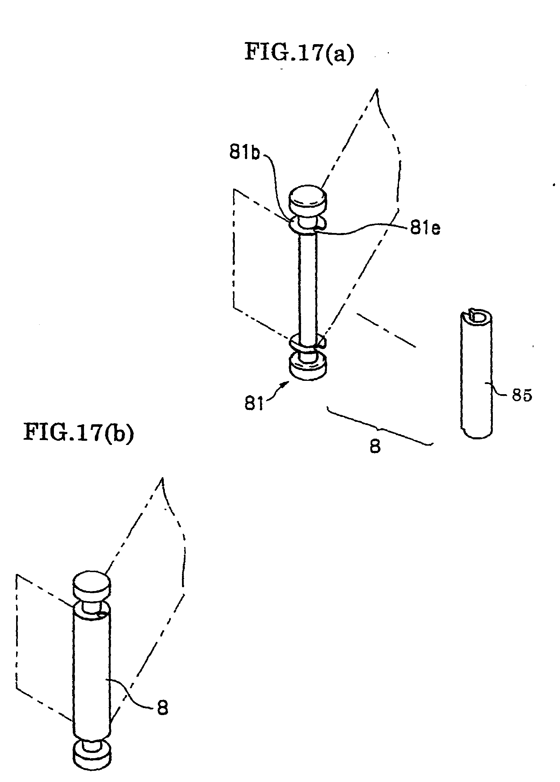

FIG. 17 illustrates a modified form in which C-shaped clamp 85 has no slit but each of two first flanges 81b on pin member 81 has a notch 81e. Thus when C-shaped clamp 85 is fitted over the pin member, the notches partially expose the both ends of C-shaped clamp 85 so that the exposed portions permit the clamp to be removed with ease.

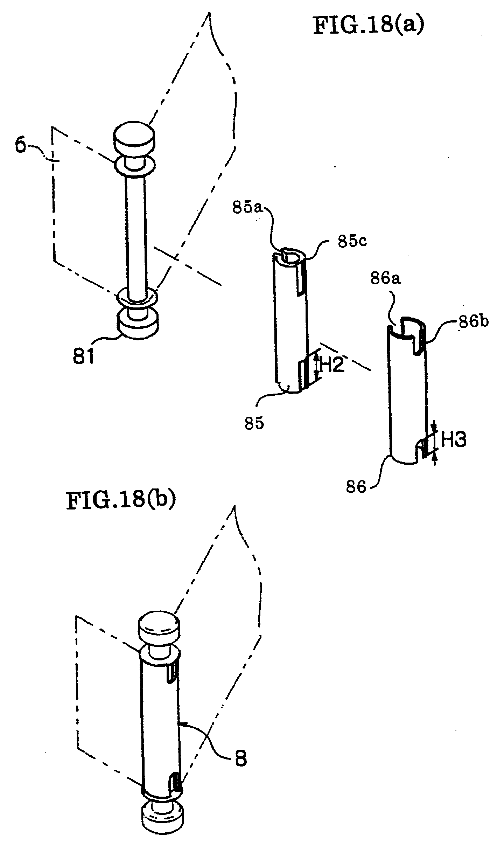

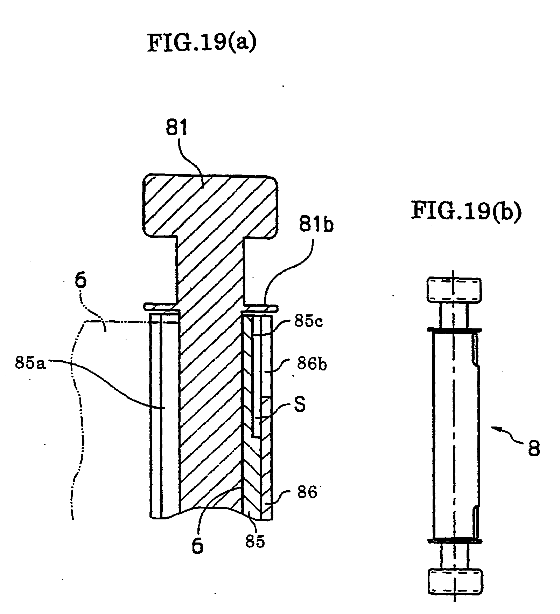

FIGS. 18 and 19 show an embodiment in which a second clamp 86 is fitted over a C-shaped clamp 85. In this embodiment an elastomer or the like softer than the above-mentioned resins may be used as the material for C-shaped clamp 85. Second clamp 86 of a material harder (more rigid) than that of C-shaped clamp, e.g., metal, is fitted over it, ensuring positive tape clamping. C-shaped clamp is formed with a pair of slits 85c, and second clamp 86 is formed with a pair of slits 86b in portions corresponding to slits 85c. The axial height H2 of each slit 85c is greater than the height H3 of each slit 86b. As a consequence, spaces S are provided between the two clamps when they are assembled, and the outer clamp can be easily detached from the inner clamp by inserting a pin-like tool (not shown) into the spaces.

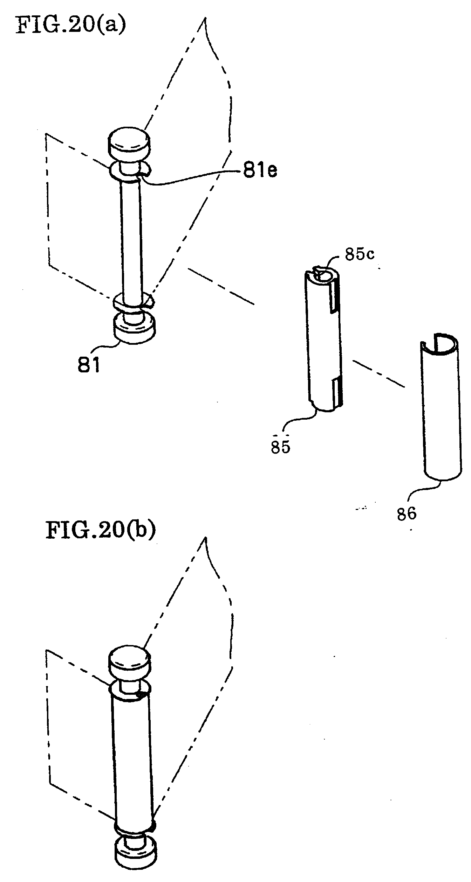

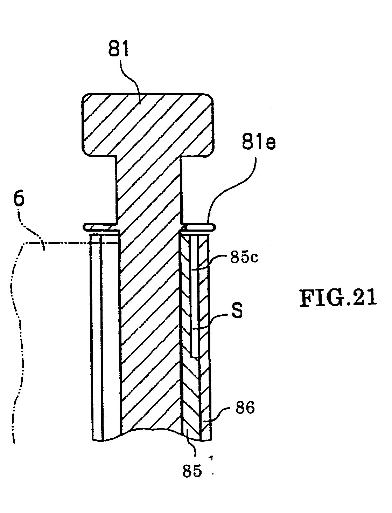

FIGS. 20 and 21 illustrate a modification of the embodiment shown in FIGS. 18 and 19. Like the counterpart of FIG. 17, first flanges 81b of pin member 81 are formed with notches 81e, one for each. Since each space S between C-shaped clamp 85 and second clamp 86 faces one of notches 81e, the clamp can be removed with ease as explained above.

While the invention has been described in detail in its preferred embodiments, it is to be understood that the embodiments are merely by way of illustration and that various modifications may be made therein, including combinations of the afore-described embodiments.

According to the present invention, either the pin member or clamp member both of which constitute a leader is formed with detaching portions for separating the two members. Thus, when leaders are erroneously assembled they may be disassembled for reuse and, even when erroneous assembling has given defective products the leaders can be disassembled into resources for recovery.

## Claims

1. A tape cartridge wherein a single tape reel on which a length of tape is wound is turnably held within a housing, the beginning of tape is fixed to a leader, and the tape is drawn out through an opening formed in the housing by a tape draw-out member into a recorder, characterized in that
said leader comprises a pin member and a generally C-shaped clamp member adapted to fit over the pin member, at least either the outer surface portion of said pin member or the inner surface of said clamp member that comes in contact with tape is formed with at least one surface irregularity.

2. The tape cartridge according to claim 1, characterized in that either the outer surface of said pin member or the inner surface of said C-shaped clamp member is formed with at least one groove and the opposing surface is formed with at least one rib to fit in said at least one groove.

3. The tape cartridge according to claim 1 or 2, characterized in that said generally C-shaped clamp member is made of plastic and said leader further comprises a second clamp member of metal provided on the outer surface of said clamp member.

4. A tape cartridge wherein a single tape reel on which a length of tape is wound is turnably held within a housing, the beginning of tape is fixed to a leader, and the tape is drawn out through an opening formed in the housing by a tape draw-out member into a recorder, characterized in that
said leader is composed of a pin member and a generally C-shaped clamp member,
said pin member has a tape-holding part in the center and, from the center toward the both ends, first flanges, necks, and second flanges in the order of mention, one each, and
said pin member consists of a combination of a plurality of components.

5. The tape cartridge according to claim 4, characterized in that said first flanges are made separate from the rest of pin member.

6. The tape cartridge according to claim 4 or 5, characterized in that said tape-holding part is made of plastic and said necks are made of metal.

7. A tape cartridge wherein a single tape reel on which a length of tape is wound is turnably held within a housing, the beginning of tape is fixed to a leader, and the tape is drawn out through an opening formed in the housing by a tape draw-out member into a recorder, characterized in that
said leader is composed of a pin member and a C-shaped clamp member so that tape wound on the pin member is fixedly held by the C-shaped clamp member thereon, and either said pin member or said clamp member is formed with detaching portions by which the two members can be separated.

8. The tape cartridge according to claim 7, characterized in that said detaching portions are slits formed in either said pin member or said C-shaped clamp member.

9. The tape cartridge according to claim 7 or 8, characterized in that said leader includes a plurality of C-shaped clamp members and that the outermost C-shaped clamp member is made of a harder material than any of the inner clamp members.

10. The tape cartridge according to claim 9, characterized in that spaces (S) for the detachment of clamp members are formed between the outermost clamp member and the inner clamp members.
